# EUROPEAN PATENT SPECIFICATION

(11) **EP 1 448 471 B1**
(45) Date of publication and mention of the grant of the patent: **05.01.2011**
(21) Application number: 02791127.0
(22) Date of filing: 21.11.2002
(51) Int. Cl.: B66C 13/08, B66C 13/14

(54) **DEVICE FOR MOUNTING OF A TURNABLE IMPLEMENT**
VORRICHTUNG ZUR BEFESTIGUNG EINES DREHBAREN WERKZEUGS
DISPOSITIF POUR MONTER UN OUTIL ROTATIF

(30) Priority: 26.11.2001 SE 0103935
(43) Date of publication of application: 25.08.2004
(73) Proprietor: Komatsu Forest AB, 907 04 Umea (SE)
(72) Inventor: EKMAN, Tommy, S-922 75 Amsele (SE)
(74) Representative: Nikolopoulou, Sofia
(86) International application number: PCT/SE2002/002117
(87) International publication number: WO 2003/057615

(56) References cited:
- DE-A1- 2 838 428
- DE-A1- 3 132 489
- FR-A- 2 414 803
- US-A- 4 211 252
- US-A- 4 333 676
- US-A- 4 989 652

## Description

The present invention concerns a device to mount a rotating implement as described in the preamble to claim 1. Such an implement is known from US-A-4,211,252.

Crane-mounted rotatable implements such as tree processing units or log grapples are carried by a crane arm for rotating around a first pivot axis comprising the centre or main axis of the implement and at least one other pivot axis relative to the crane arm. This second pivot axis normally comprises one hinged link between the implement and the crane arm. To execute the said pivoting movement around the first pivot axis, there is a rotator arranged between the implement and the crane arm. Using a swivel coupling in the rotator, a hydraulic medium can be transferred between the crane arm and a hydraulically acting driving means in the rotator and, where appropriate, also between the crane arm and other consumers included in the implement. The driving means in a conventional rotator consumer is served, i.e. supplied with and evacuated of a hydraulic medium, via lines comprising as et of flexible hoses, which, originating from the crane arm in the form of a bunch of hoses hanging outside and at a distance from the implement's hinged links with the crane arm, are attached to the top of the rotator via protruding angled unions. In the pivot pin contained in a rotator are arranged passages running axially, which are in fluidal connection with radial passages running through the wall of a housing surrounding the pivot pin. In known rotators and associated swivel couplings, the housing is the part that is linked to the end of the crane arm, while the pivoted pin in the housing is the part that is linked to the implement. For reasons that are easy to appreciate and mentioned in the foregoing, the connecting unions at the upper end of the rotator to which the pairs of hoses outgoing from the crane arm are connected will extend radially or at an angle from the outside of the swivel coupling's essentially cylinder-shaped housing. The connecting unions at the bottom of the rotator for the pairs of hoses outgoing from the rotator extend in the axial direction of the pivot pin straight down from its flat bottom or end face.

It should also be understood that the hydraulic lines connected to the connecting unions on the upper end of the rotator will for design reasons extend radially from the housing. By means of a certain degree of slackness or excess, the said hydraulic lines connected to the upper end of the rotator will bend away from the hinged link between the implement and the crane arm in so far as they will run clear of and be at such a distance from the said link connections that they will not risk being pinched during the operational movement of the implement. Meanwhile, hydraulic lines or hoses have tended to swing to and fro in an uncontrolled manner during the movement of the implement and sometimes come in contact with tree trunks, wooden stanchions or other objects in the vicinity of the implement and the working range of the crane arm, which can lead to hose failure or other similar damage. Should the occasion arise, not only must the implement undergo costly service with subsequent down-time and reduction in production of the forestry machine as a result but also the hydraulic oil that escapes after, for example, a hose failure will harm the environment.

One object of the present invention is therefore to achieve a means of suspension of an implement of the aforesaid type that does not exhibit the said disadvantages but is so constructed that the flexible hydraulic lines between the crane and the implement are w ell protected and cannot swing in an uncontrolled manner during the operational movement of the implement and/or crane arm.

A further object is to achieve a rotator that is designed so that the normally occurring radially protruding connecting unions on the top end of the rotator or its housing can be avoided and thereby the hydraulic lines extending between the crane arm and the implement can be positioned more centrally to the link connections between the implement and the crane arm.

A third object of the invention is to achieve a combination of units for crane-mounted rotatable implements whereby all the aforesaid problems have been eliminated.

This can be achieved with the distinctive features and characteristics specified in the following claims.

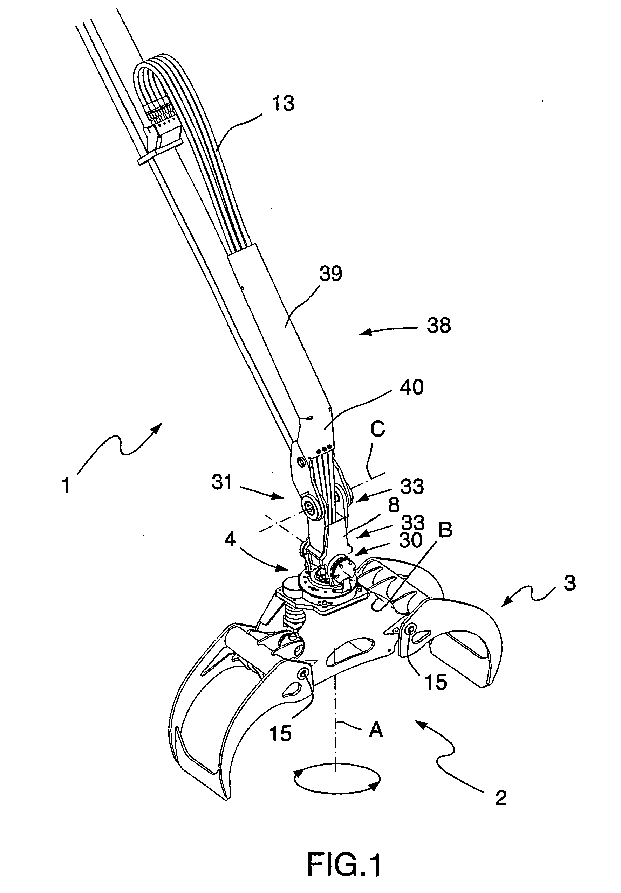

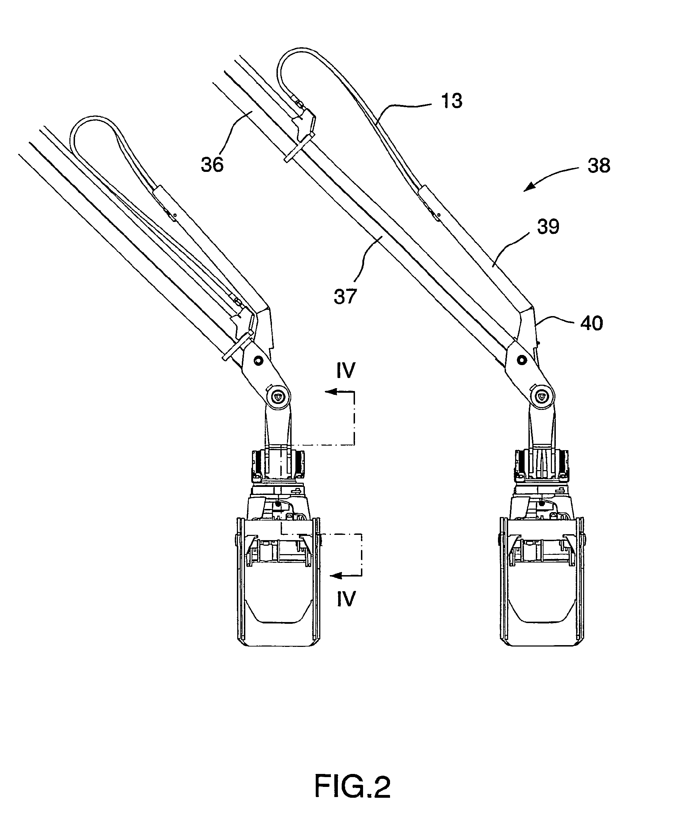

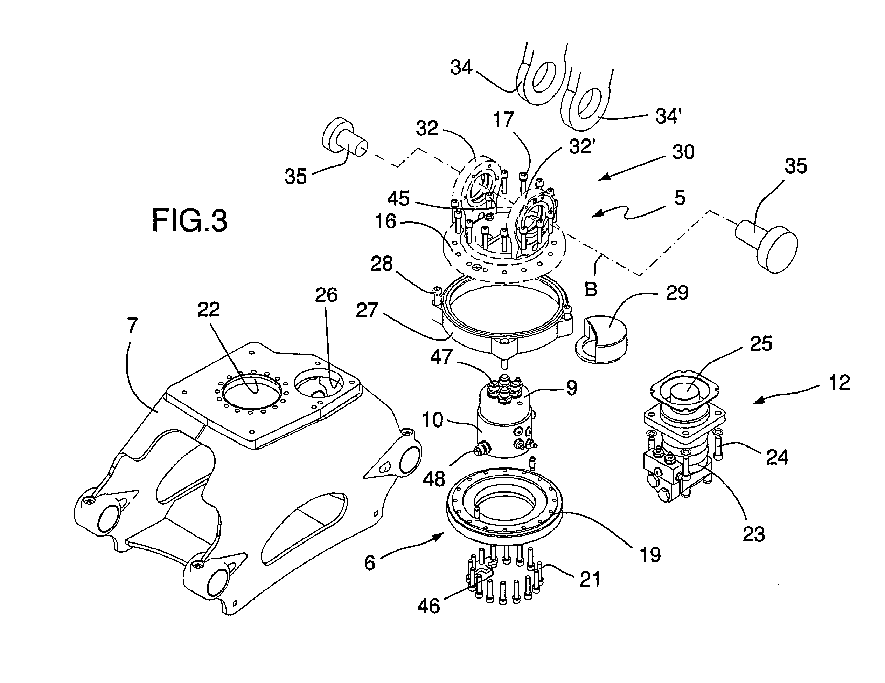

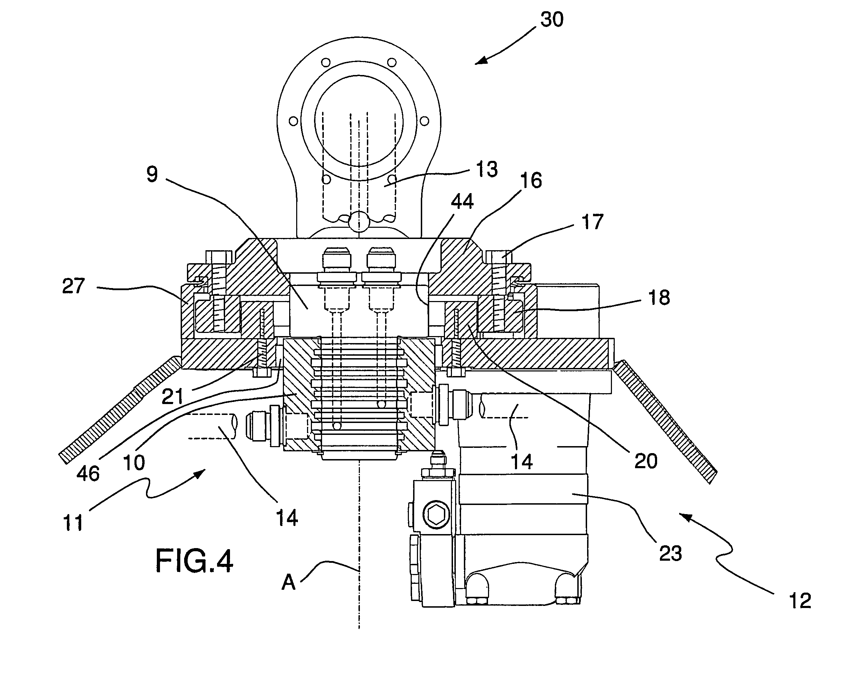

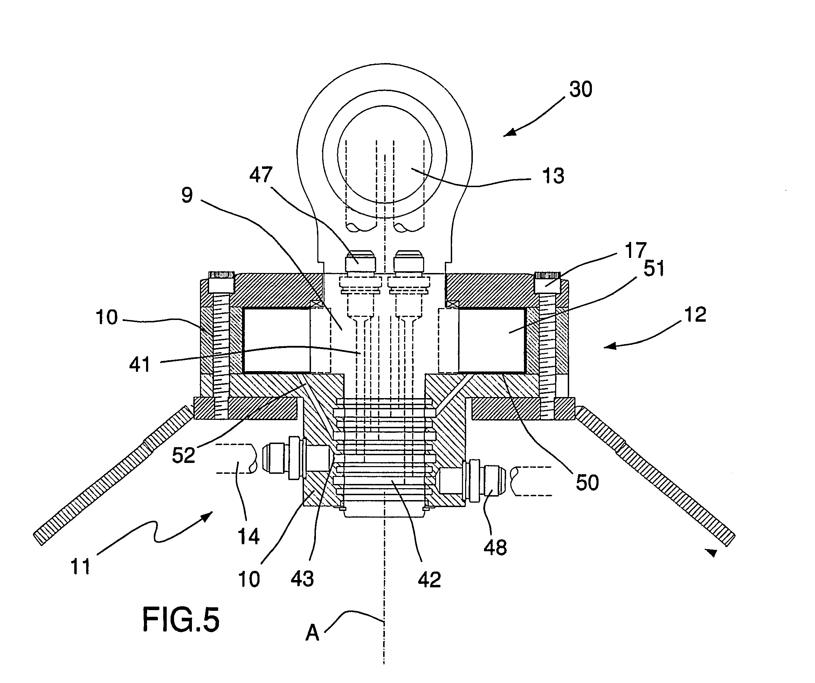

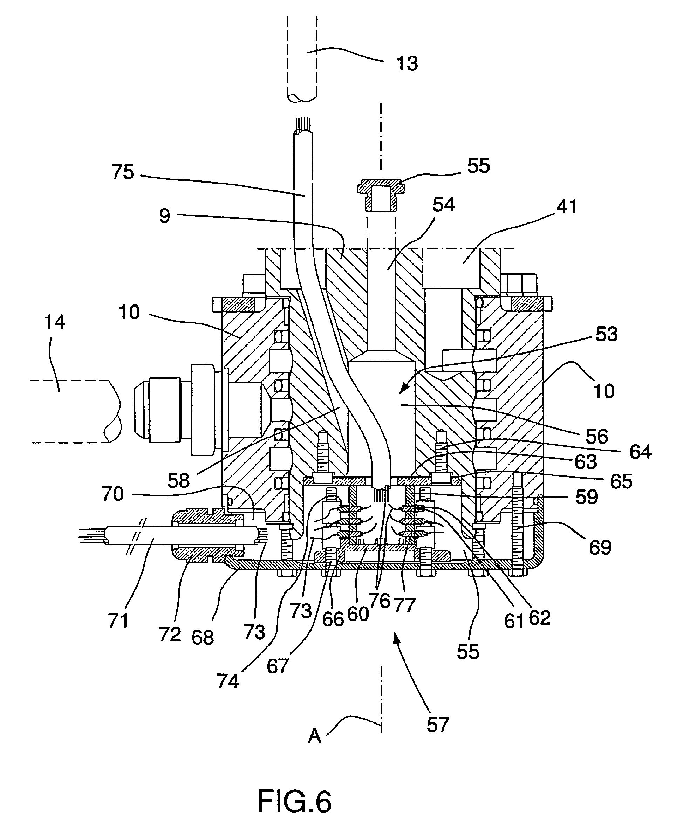

The following is a description of this invention with references to attached drawings, where **fig. 1** shows a perspective view of a crane-mounted tree processing unit according to the invention arranged on the free end of a telescopic crane arm, wherein the implement is equipped with a means of gripping the tree, **fig. 2** shows a side view of the tree processing unit shown in fig. 1 with the telescopic crane arm contracted and extended respectively, **fig. 3** shows a view of part of the tree processing unit with disassembled parts, **fig. 4** shows a cross section of a rotator viewed along the line IV-IV in fig. 2, **fig. 5** shows a cross section of a rotator in an alternative embodiment and fig. 6 shows a cross section of a part of a rotator in a third alternative embodiment for combined swivelling of both hydraulic medium and electrical control signals.

In the figures, a crane arm is designated 1 and an implement, which in this case comprises an implement with a means of gripping the tree 3, that can rotate relative to the crane arm is designated 2. The implement 2 is suspended from the free end of the crane arm via a rotator 4, one end of which is linked to the crane arm 1 with an attaching part 5 and the other end of which is rotatable via a pivot bearing 6 in the implement frame 7 for rotating around a first pivot axis A. The rotator 4 allows the implement to be rotated around the pivot axis A and thereby around its own axis as is illustrated with the arrow loop in fig. 1. The crane arm also contains a link 8 at which the attaching part 5 is supported by the crane arm 1 via the said link for rotating the implement 2 around a first and a second relative each other perpendicular pivot axes B and C respectively. Through this mounting, the implement 2 is allowed to rotate cardanically in two different directions to the said pivot axis A.

Referring to fig. 3 and 4, the rotator 4 carries a swivel pin 9 that is pivot-mounted in a housing 10 fastened to the implement's frame 7 for rotating around the pivot axis A and which swivel pin forms part of a swivel coupling generally designated 11 for supplying (delivering and evacuating respectively) hydraulic medium to the operating chambers of a hydraulic means of driving 12 in the rotator 4 and supplying one or more additional consumers, among them piston-cylinder devices not shown in the figure used for operating the unit's 2 means of gripping 3.

The rotation and centre axes of pivot bearing 6 and swivel pin 9 are coaxial with the first pivot axis A. The delivery and evacuation of hydraulic fluid to the rotator 4 and the additional consumers of the implement 2 is done through a first and second pair of flexible lines 13 that, originating from the crane arm 1 and extending downwards, are connected to one end of the rotator 4. From the other end of the rotator is a pair of lines 14 (in the figure only indicated with dashed lines) that are connected to the rotator's 4 means of driving 12 and other consumers respectively. The said flexible pair of lines 13 running along the crane arm are connected in a conventional way to a pump and tank respectively on a vehicle (not shown) that is carrying the crane arm in question. The aforesaid components comprising the rotator 4 and swivel coupling 11 are arranged to the frame 7 included in the implement 2.

Although this example of a mounting arrangement is illustrated and described for connection to a conventional grapple unit for trees, it should also be understood that the principle for the same nonetheless can be used in combination with any other type of crane-mounted implement such as a felling head with chain saw guide bar intended for a forestry machine or similar.

The unit's two means of gripping 3 are pivot mounted in a conventional manner with pins 15 arranged in the frame and each comprises a shank on each side of a line of symmetry through the stand coinciding with the centre axis A.

Referring to fig. 3, the rotator 4 comprises an essentially circular upper part 16 that is fastened with bolts 7 to an outer gear ring 18 arranged on the periphery of a slew gear 19 included in the pivot bearing 6. The inner ring designated 20 for the said slew gear 19 rests on a plane against the centre axis A at right angles to the top of the frame 7 and by means of bolts 21 is fixed to the frame so that the slew bearing's hollow centre concentrically coincides with a hole 22 in the frame. The means of driving 12 comprises a hydraulic motor 23, which via bolts 24 is fastened to the frame 7 in such a way that its geared 25 drive shaft extends through a second hole 26 in the frame 7 and is mesh with the outer gear ring 18 of the slew bearing in order to turn it and thereby also turn the frame 7 or implement 2 in different directions around the first pivot axis A. On the essentially flat top of the frame 7 is a principally circular housing 27 covering the outer gear ring that is fastened with bolts 28 to the said top of the frame. In a similar way, an open-bottomed cover 29 is arranged on the hydraulic motor 23 gear wheel 25 and is clamped between the cover 27 and the flat top of the frame 7.

As illustrated in fig. 4, the rotator's 2 circular upper part 16 as well as the free ends of the crane arm 1 are equipped with a forked part 30 and 31 respectively, where each such forked part principally comprises a pair of fork shanks 32, 32' at a distance from each other and parallel with the centre axis A, each defining a hinge point. The said fork shanks are located relative to each other in such a way that they between them contain a space between the pivot centre of the relatively hinged parts. The link 5 extending between the crane arm 1 and the rotator 2 is similarly equipped at its ends with a forked part 33 and associated fork shanks 34, 34' located a distance from each other, which, as should be illustrated by the figures, is located in the space formed in the forked parts 30, 31 of the crane arm and rotator respectively. The hinged link between each such forked part, located in each other, one in the other, comprises a pair of opposing pins 35, 35' that hinge together the respective adjacent fork shanks of the meeting forked parts. The said opposing pair of pins 35, 35' are of a length that has been chosen to extend through both on each side of each hinge meeting fork shanks 32, 32' and 34, 34' respectively without encroaching to any greater degree the space formed between the fork shanks. As the hinge points are separate and positioned at a distance from each other along the pivot axis (B) hinge pin line, a type of open hinge construction is obtained that is both light weight and offers a substantial and broad crane tip with associated broad hinges for secure connection of implements to the crane arm.

The link 8 is designed as a hollow beam or box and therefore exhibits an axial hole running through it, whereby, as illustrated in the figures, the respective pairs of lines 13 leading from the crane arm extend through the relative pivot centres B and C respectively of the hinged parts 1, 2, 8, via the inner cavity of the link. Through the resulting open design of the hinged links, the pairs of hydraulic lines 13 extending between the crane arm 1 and the unit 2 can be placed in close proximity to the pivot axis A and in principle so that the pairs of lines cut the axis. Extending through the pivot centres B, C of the relative hinged parts and the link 8 cavity respectively, the flexible hydraulic lines are both well protected during the movement of the unit and connected to the rotator in close proximity of the pivot axis A and in principle arranged in a circle around the said first pivot axis A. By this arrangement, the hydraulic lines are exerted to only minimal strain from bending and twisting movements also in the case where the implement 2 is operated between its endmost positions.

In this illustrated embodiment, the crane arm 1 is of telescopic type comprising two telescopically interposed boom-like parts 36, 37. Fig. 2 shows the telescopic crane arm in contracted and extended position respectively. To prevent the hydraulic lines 13 running along the outside of the crane arm from swinging to and fro in an uncontrolled manner and possibly thereby also being damaged through entanglement, stretching or friction during the telescopic movement of the crane arm, there is a means of guiding generally designated 38 arranged on the free end of the crane arm 1. The means of guiding 38 comprises a rigid channel-shaped arm 39, one end of which is fastened to the transitional area between the forked part's 31 join to the crane arm and is located parallel to the outer section of the crane arm 1 at a distance from its upper side. As illustrated in fig. 2, the longitudinal concave inside of the rigid arm 39 facing the crane arm contains the pairs of hydraulic lines 13 extending between the crane arm 1 and the unit 2, whereby the pairs of lines are arranged against the inside of the arm and are secured to the arm during the relative movements of the boom-like parts. In order to provide a smooth transition of the pair of lines 13 between the means of guiding 38 and the hollow interior of the link 8 during the relative movements of the boom-like parts, the rigid arm, in the area of its joining with the crane arm 1, is equipped with a part 40 that is angled downwards towards the crane arm and via outward extensions on both sides of the downward angled part is rigidly joined to the end of the crane arm.

Referring to fig. 4, a swivel coupling 11 is obtained in a conventional manner in that the swivel pin 9 is pivot-mounted in the housing designated 10 by means of suitable bearings and seals. For supplying the rotator 4 means of driving 12 with hydraulic medium, passages in the form of a set of axially drilled holes 41 extend through the swivel pin 9. These drilled holes open into respective groove-shaped peripheral passages 42 in the hole wall of the housing and continue via radial passages 43 out through the wall of the housing 10. The swivel pin 9 exhibits at one end a thicker part 44 that is mounted in the cavity located in the inner ring 20 of the centre of the slew bearing 19. The upper end of the swivel pin 9 in the form of the thicker part 44 is fastened to the rotator's 2 circular upper part 16 with bolts. The swivel coupling housing 10 is joined to the frame 7 via a cross-slotted union 46 so that the swivel pin and the housing can be moved axially in the slew bearing's 19 inner ring 20 for fitting.

Unlike conventional rotators 4 in which the housing 10 is normally joined to the crane arm 1 and is fitted with unions protruding radially towards the pivot axis A for connecting the pairs of lines 13 coming from the crane arm, and the swivel pin 9 can be joined to the implement 2 and is fitted with unions protruding downwards parallel with the pivot axis A for connecting the pair of lines 14 coming from the rotator, the present rotator 4 is so designed that it can be mounted in the corresponding way or in the opposite direction. That is to say, that the swivel pin 9 can be joined to the crane arm 1 via the rotator's 4 attaching part 5 and the housing 10 can be joined to the implement's 2 frame 7. As best illustrated in fig. 1, this offers the advantage that the connecting unions 47 located on the end of the swivel pin 9 and extending parallel with the centre axis are arranged in a circle in the centre of the slew bearing 19 and face upwards towards a plane that is parallel with the second pivot axis B and to which plane the first pivot axis A, in which the implement 2 in this case via the link 8 is suspended from the crane arm, forms a normal. The connecting unions 4 8 for the pairs of lines 14 coming from the lower end of the rotator are directed radially out from the circular outer of the housing 10.

Fig. 5 shows the rotator in an alternative embodiment and comprises herein a swivel pin 9 supported by the attachment part 5 of the rotator and a housing 10 that can be joined to the frame of the implement and in which the swivel pin is pivot-mounted through suitable bearings and seals. In the area of a cavity or a space 50, the swivel pin exhibits a thicker part 51, in which, in a conventional and well-known manner and therefore not illustrated in the figure, are arranged two spring-loaded flaps that divide the space into two sub- or working chambers. The said parts consequently form the means of driving the rotator 12, which here constitutes an integral part of the rotator. 47 designates the connecting unions for connecting a pair of lines coming from the crane arm 1 and 41 designates a first pair of axially drilled holes or passages in the swivel pin 9, each one of which opens into a swivel coupling 11 comprising a set of circular cavities 42 located at different levels in the housing and into two of which cavities the said drilled holes open. The said cavities are connected via radial passages 43 to the connecting unions 48 that, protruding radially from the peripheral outer of the housing, are intended for connecting hydraulic medium lines 14 and thereby supplying other consumers included in the implement such as the illustrated piston-cylinder means used to operate the unit's 2 means of gripping 3. Dashed lines illustrate a second pair of axial passages 41 that also open into two circular cavities 42 in the swivel coupling. For supplying the rotator 4 working chambers, the said respective circular cavities 42 are connected to respective working chambers in the housing via respective channels 52 extending diagonally through the housing. As the flexible and with dashed lines indicated hydraulic lines 13 leading from the crane arm 1 to the rotator 4 can be connected to the rotator axially relative to the first pivot axis A they can be located more centrally in the middle of the hinged links between the implement 2 and the crane arm 1.

Fig. 6 shows the present rotator in an embodiment where it not only offers an elegant routing of the lines used to convey a hydraulic medium from the crane arm 1 to the implement 2 carried at its end but also allows electric and data signals to be conveyed between the implement and a control system for it that is located in the vehicle carrying the crane arm (not shown in the figures).

Fig. 6 shows a longitudinal section through part of the lower end of the rotator 4 that is facing the implement 2. As illustrated in fig. 6, there is a circular cylindrical cavity generally designated 53 in the lower end of the swivel pin 9 centre. In a direction parallel with the centre or pivot axis A extends a drilled hole 54 that at its top end terminates in an opening fitted with an air filter 55. The cavity 53 is two spaces arranged axially in succession in the form of an outer space 55 and an inner space 56 of which the outer space is diametrically somewhat larger then the inner space and contains a swivel and slip-ring unit generally designated 57 for conveying electrical signals between the implement and the control system. As described earlier, reference number 41 designates the axial drillings that are used to convey a hydraulic driving medium via a swivel coupling 11 to a consumer, such as the means of driving 12 the rotator 4. A closer study of fig. 6 will clearly reveal that a passage 58 is arranged extending diagonally between one of these axial drillings 41 and the inner space 56.

The swivel and slip-ring unit 57 comprises a stator 59 and a rotor 60 with a number of inter-rotating contact paths of ring-shaped tracks 61 with slip rings 62 running in them. The stator 59 comprises a flange ring upper part 63 fastened with bolts 64 to a flat 65 shoulder made in the transition between the outer and the inner chambers 55, 56. The rotor 60 comprises a flange ring lower part 66 fastened with bolts 67 to a casing 68 used to cover the end of the swivel pin 9. The said casing 68 is in turn detachably mounted with bolts 69 to the rotator 4 housing 10. The casing 68 has an opening 70 through which a strand 71 of a cable from the implement 2 extends and to which opening the strand is secured with a means of load relief 72. The individual conductors 73 in the said strand 71 of the cable are in contact with the connecting or contact points 74 of the rotator part 60.

One interesting distinctive feather of the present invention is that one of the axial drillings 41, which is normally used to supply a consumer with hydraulic medium via a swivel coupling 11, in combination with the diagonally arranged passage 58 is used as a lead-through for a strand 75 of a cable from the crane arm 1. To be precise, the strand 75 forms part of the wiring that is in connection with the control system for the implement that is situated in the vehicle carrying the crane arm 1. The individual conductors 75 of the cable are in contact with the connecting or contact points 77 of the stator 59.

In order to both protect the wiring from chafmg and to make the cables exhibit characteristics that are essentially comparable to the hydraulic-conveying lines, the hydraulic lines are utilised as through passages for the wiring, whereby such a line can be suitably connected to one of the protruding connecting unions 47. Contrary to known technology in which the cables are arranged hanging in bunches so as to go clear of the link connection between the top of the crane and the implement, a uniform and very elegant routing of the hydraulic lines and wiring through the centre of the hinge connection is obtained hereby.

## Claims

1. A device to mount a rotating implement (2) to a crane arm (1), comprising;
a rotator (4) located between the crane arm and a unit that at one end is pivot-mounted to the implement for rotating the same relative to the crane arm and slewing around a first pivot axis (A) and at the other end is mounted to the crane arm via a hinged link for slewing around a second pivot axis (B),
a swivel coupling (11) arranged on the rotator for supplying the working chambers of a drive (12) for the rotator with a hydraulic medium;
one or more connecting unions (47) provided to one end of the said swivel coupling, said coupling unions being provided with hydraulic medium lines (13) leading from the crane arm, **characterised in that**;
the hinged link between the crane arm (1) and the rotator (4) is designed as an open joint defined by two hinged points located at a distance from each other along the joint axis of the second pivot axis (B),
the connecting unions (47) are arranged extending parallel to the first pivot axis (A) and facing towards the second pivot axis (B), whereby the hydraulic medium lines connected to the connecting unions pass between the said hinged points located at a distance from each other.

2. A device according to claim 1, in which the connecting unions are distributed in a circle around the first pivot axis (A).

3. A device according to claim 1, in which the rotator's (4) hinged link to the crane arm (1) is via an intermediate hollow link (8) to which one end of the rotator is hinged for slewing around the second pivot axis (B) and the other end of which link is hinged to the crane arm for slewing the unit around a third pivot axis (C) relative the crane arm, in which also the third axis (C) is also designed as an open joint defined by two hinge points located a distance from each other along its joint axis.

4. A device according to claim 3, whereby the hydraulic medium lines (13) connected to the connecting unions (47) run through a link (8) cavity passing between the hinge points for both the second and the third pivot axes (B) and (C) respectively located a distance from each other along the joint axis.

5. A device according to claim 3, whereby the first and the second pivot axis (B) and (C) respectively are located at an angle to each other so that the unit is allowed to slew cardanically in different directions.

6. A device according to claim 1, whereby each open joint is formed by two interlocking forked parts (30; 31), one in the other, the hinged fork shanks (32, 32; 34, 34') of which form the hinge points located a distance from each other.

7. A device according to claim 1, whereby the crane arm (1) is of the extendable telescopic type comprising two telescopic boom-like parts (36, 37) mounted one inside the other, and that a guide (38) for the lines (13) is arranged on the free end of the crane arm between which guide and the crane arm the lines are arranged during the relative movement of the boom-like parts.

8. A device according to claim 1, whereby the guide (38) comprises a rigid arm (39), one end o which is fastened at the hinged link (C) on the free end of the crane arm and which arm, located parallel with the outer section of the crane arm (1) and a distance from its upper side, exhibits an inside facing the crane arm against which the lines (38) are brought and fixed.

## Patentansprüche

1. Vorrichtung zur Befestigung eines drehbaren Werkzeugs (2) an einem Kranarm (1), umfassend:
eine Dreheinrichtung (4), die zwischen dem Kranarm und einer Einheit positioniert ist, die an einem Ende über einen Drehzapfen an dem Werkzeug befestigt ist, um dieses bezüglich des Kranarms zu drehen und um eine erste Schwenkachse (A) zu schwenken, und am anderen Ende über ein Gelenkverbindungsglied am Kranarm befestigt ist, um um eine zweite Schwenkachse (B) zu schwenken,
eine Schwenkkupplung (11), die an der Dreheinrichtung angeordnet ist, um die Arbeitskammern eines Antriebs (2) für die Dreheinrichtung mit einem hydraulischen Medium zu versorgen;
ein oder mehrere Anschlussstücke (47), die an einem Ende der Schwenkkupplung vorgesehen sind, wobei die Kupplungsstücke mit Hydraulikmediumleitungen (13) versehen sind, die von dem Kranarm wegführen, **dadurch gekennzeichnet, dass**
das Gelenkverbindungsglied zwischen dem Kranarm (1) und der Dreheinrichtung (4) als eine offene Verbindung ausgeführt ist, die durch zwei Gelenkpunkte definiert wird, welche in einem Abstand voneinander entlang der Verbindungsachse der zweiten Schwenkachse (B) positioniert sind,
die Anschlussstücke (47) so angeordnet sind, dass sie sich parallel zur ersten Schwenkachse (A) erstrecken und der zweiten Schwenkachse (B) zugekehrt sind, wodurch die mit den Anschlussstücken verbundenen Hydraulikmediumleitungen zwischen den Gelenkpunkten passieren, die in einem Abstand voneinander positioniert sind.

2. Vorrichtung nach Anspruch 1, wobei die Anschlussstücke in einem Kreis um die erste Schwenkachse (A) verteilt sind.

3. Vorrichtung nach Anspruch 1, wobei die Gelenkverbindung der Dreheinrichtung (4) mit dem Kranarm (1) über ein hohles Zwischenverbindungsglied (8) erfolgt, an dem ein Ende der Dreheinrichtung zum Schwenken um die zweite Schwenkachse (B) angelenkt ist, und das andere Ende dieses Verbindungsglieds an dem Kranarm angelenkt ist, um die Einheit um eine dritte Schwenkachse (C) bezüglich des Kranarms zu schwenken, wobei auch die dritte Achse (C) als eine offene Verbindung ausgeführt ist, die durch zwei Gelenkpunkte definiert wird, welche in einem Abstand voneinander entlang ihrer Verbindungsachse positioniert sind.

4. Vorrichtung nach Anspruch 3, wobei die mit den Anschlussstücken (47) verbundenen Hydraulikmediumleitungen (13) einen Hohlraum des Verbindungsglieds (8) durchlaufen, der sich zwischen den Gelenkpunkten für sowohl die zweite als auch die dritte Schwenkachse (B) bzw. (C), die entlang der Verbindungsachse in einem Abstand voneinander positioniert sind, erstrecken.

5. Vorrichtung nach Anspruch 3, wobei die erste und die zweite Schwenkachse (B) bzw. (C) in einem Winkel zueinander positioniert sind, so dass die Einheit kardanisch in verschiedenen Richtungen schwenken kann.

6. Vorrichtung nach Anspruch 1, wobei jede offene Verbindung durch zwei gegabelte Verriegelungsteile (30; 31) gebildet wird, die ineinander greifen und deren angelenkte Gabelschenkel (32, 32'; 34, 34') die Gelenkpunkte bilden, die in einem Abstand voneinander positioniert sind.

7. Vorrichtung nach Anspruch 1, wobei der Kranarm (1) der ausziehbaren, teleskopischen Art ist, die zwei teleskopische, auslegerartige Teile (36, 37) umfasst, welche ineinander angebracht sind, und eine Führung (38) für die Leitungen (13) am freien Ende des Kranarms angeordnet ist, wobei die Leitungen während der Relativbewegung der auslegerartigen Teile zwischen dieser Führung und dem Kranarm angeordnet sind.

8. Vorrichtung nach Anspruch 1, wobei die Führung (38) einen starren Arm (39) umfasst, von dem ein Ende an dem Gelenkverbindungsglied (C) am freien Ende des Kranarms befestigt ist, wobei dieser parallel zu dem Außenabschnitt des Kranarms (1) und in einem Abstand von seiner Oberseite positionierte Arm eine dem Kranarm zugekehrte Innenseite aufweist, gegen die die Leitungen (38) gebracht und an der sie befestigt werden.

## Revendications

1. Dispositif pour monter un outil rotatif (2) sur un bras de grue (1), comprenant :
un rotateur (4) situé entre le bras de grue et une unité qui, à une extrémité, est montée sur pivot sur l'outil de manière à faire tourner l'outil par rapport au bras de grue et pivotant autour d'un premier axe de pivotement (A), et, à l'autre extrémité, est montée sur le bras de grue par le biais d'une liaison articulée en vue de pivoter autour d'un deuxième axe de pivotement (B),
un accouplement de pivotement (11) agencé sur le rotateur pour alimenter les chambres de travail d'un entraînement (12) pour le rotateur en un fluide hydraulique ;
une ou plusieurs unions de connexion (47) prévues à une extrémité dudit accouplement de pivotement, lesdites unions de connexion étant pourvues de conduites de fluide hydraulique (13) partant du bras de grue, **caractérisé en ce que** :
la liaison articulée entre le bras de grue (1) et le rotateur (4) est conçue sous forme de joint ouvert défini par deux points articulés situés à une certaine distance l'un de l'autre le long de l'axe de joint du deuxième axe de pivotement (B),
les unions de connexion (47) sont agencées de manière à s'étendre parallèlement au premier axe de pivotement (A) et à être tournées vers le deuxième axe de pivotement (B), les conduites de fluide hydraulique connectées aux unions de connexion passant entre lesdits points articulés situés à une certaine distance l'un de l'autre.

2. Dispositif selon la revendication 1, dans lequel les unions de connexion sont réparties dans un cercle autour du premier axe de pivotement (A).

3. Dispositif selon la revendication 1, dans lequel la liaison articulée du rotateur (4) au bras de grue (1) est réalisée par le biais d'une liaison creuse intermédiaire (8) à laquelle est articulée une extrémité du rotateur en vue de pivoter autour du deuxième axe de pivotement (B), l'autre extrémité de ladite liaison étant articulée au bras de grue en vue de faire pivoter l'unité autour d'un troisième axe de pivotement (C) par rapport au bras de grue, le troisième axe (C) étant également conçu sous forme de joint ouvert défini par deux points articulés situés à une certaine distance l'un de l'autre le long de son axe de joint.

4. Dispositif selon la revendication 3, dans lequel les conduites de fluide hydraulique (13) connectées aux unions de connexion (47) s'étendent à travers une cavité de liaison (8) passant entre les points articulés pour les deuxième et troisième axes de pivotement (B) et (C) respectivement situés à une certaine distance l'un de l'autre le long de l'axe de joint.

5. Dispositif selon la revendication 3, dans lequel les premier et deuxième axes de pivotement (A) et (B) respectivement sont situés suivant un certain angle l'un par rapport à l'autre de telle sorte que l'unité puisse pivoter à la manière d'un cardan dans différentes directions.

6. Dispositif selon la revendication 1, dans lequel chaque joint ouvert est formé par deux parties en fourche emboîtées (30 ; 31), l'une dans l'autre, dont les tiges de fourche articulées (32, 32 ; 34, 34') forment les points articulés situés à une certaine distance l'un de l'autre.

7. Dispositif selon la revendication 1, dans lequel le bras de grue (1) est d'un type télescopique extensible comprenant deux parties de type flèche télescopiques (36, 37) montées l'une dans l'autre, et un guide (38) pour les conduites (13) est arrangé sur l'extrémité libre du bras de grue, les conduites étant arrangées entre ledit guide et le bras de grue au cours du mouvement relatif des parties de type flèche.

8. Dispositif selon la revendication 1, dans lequel le guide (38) comprend un bras rigide (39), dont une extrémité est attachée à la liaison articulée (C) sur l'extrémité libre du bras de grue et lequel bras, situé parallèlement à la section extérieure du bras de grue (1) et à une distance de son côté supérieur, présente une partie intérieure en regard du bras de grue, contre laquelle les conduites (13) sont amenées et fixées.
